# EUROPEAN PATENT SPECIFICATION

(11) **EP 3 691 066 B1**
(45) Date of publication and mention of the grant of the patent: **26.10.2022**
(21) Application number: 17927316.4
(22) Date of filing: 28.09.2017
(51) Int. Cl.: H02H 3/08, H01H 71/74, H02H 1/06, H02H 3/00

(54) **ELECTRONIC CIRCUIT BREAKER**
ELEKTRONISCHER SCHUTZSCHALTER
DISJONCTEUR ÉLECTRONIQUE

(43) Date of publication of application: 05.08.2020
(73) Proprietor: Mitsubishi Electric Corporation, Chiyoda-ku Tokyo 100-8310 (JP)
(72) Inventor: CHIKAI, Masataka, Tokyo 102-0073 (JP); TAKIGAWA, Yusuke, Tokyo 100-8310 (JP); HARADA, Koki, Tokyo 100-8310 (JP); NOMURA, Toshimitsu, Tokyo 100-8310 (JP)
(74) Representative: Diehl & Partner
(86) International application number: PCT/JP2017/035299
(87) International publication number: WO 2019/064453

(56) References cited:
- EP-A1- 2 858 193
- WO-A1-96/28871
- WO-A1-2014/089637
- JP-A- 2011 009 152
- JP-A- 2016 044 365
- JP-U- S59 141 431
- US-A1- 2016 294 179

## Description

### Field

The present invention relates to an electronic circuit breaker capable of adjusting tripping characteristics, which are characteristics of tripping operation to open switch contacts.

### Background

In related art, an electronic circuit breaker capable of adjusting tripping characteristics has a configuration capable of checking and adjusting set characteristic values that are parameter values determining tripping characteristics. For example, an electronic circuit breaker taught in Patent Literature 1 is provided with a variable resistance switch for adjusting the values of characteristics parameters, and capable of checking set characteristic values from the position of a knob including the variable resistance switch.

In addition, an electronic circuit breaker taught in Patent Literature 2 includes a keypad for adjusting set characteristic values, and a display for displaying the set characteristic values.

Patent Literature 3 discloses an electronic circuit breaker including a switch contact to open and close a cable run, a current detecting unit to detect current flowing through the cable run, a tripping device to open the switch contact, a communication unit to receive, from an external device, a parameter value determining characteristics of tripping operation to open the switch contact, a display unit capable of displaying the parameter value, and a control unit to cause the tripping device to open the switch contact on a basis of the current detected by the current detecting unit and the parameter value, and display the parameter value on the display unit, wherein the display unit is capable of maintaining a displayed state without power supplied thereto.

Patent Literature 4 discloses a "Comm/control bus" and an "electric ink display" which is a display technology that allows the information that is being displayed to continue to be displayed even after power to the display is removed.

Further, Patent Literature 5 (WO 2014/089637 A1) shows in Figure 3, a "single channel comms controller" and discloses, in paragraphs [0234], [0236] and [0244], a "bi-stable display" which holds the display without the need to maintain power.

### Citation List

### Patent Literature

Patent Literature 1: Japanese Patent Application Laid-open No. S62-64215
Patent Literature 2: Japanese Patent Application Laid-open No. H02-119026
Patent Literature 3: Published European Patent Application EP 2 858 193 A1
Patent Literature 4: Published U.S. Patent Application US 2016/0294179 A1
Patent Literature 5: Published International Patent Application WO 2014/089637 A1

### Summary

### Technical Problem

Electronic circuit breakers, however, have been becoming smaller in size, which causes a problem in that it has been becoming difficult to allow space for providing a variable resistance switch and to allow for space for providing both a display and a keypad.

In addition, in the electronic circuit breaker taught in Patent Literature 2, although a unit including a display and a keypad is removable, set characteristic value cannot be checked with the electronic circuit breaker in the state in which the unit is removed.

The present invention has been made in view of the above, and an object thereof is to provide an electronic circuit breaker capable of adjusting tripping characteristics without providing a space for placing a setting unit such as a variable resistance switch and a keypad, and capable of checking set characteristic values. Solution to Problem

To solve the problem and achieve the object described above, the present invention provides an electronic circuit breaker as defined in appended independent claim 1. Advantageous features of the present invention are indicated in appended dependent claims 2 to 4.

### Advantageous Effects of Invention

The present invention provides advantageous effects of enabling adjustment of tripping characteristics without providing a space for placing a setting unit such as a variable resistance switch and a keypad, and enabling checking of set characteristic values.

### Brief Description of Drawings

FIG. 1 is a diagram illustrating an example of a configuration of an electronic circuit breaker according to a first comparative example.
FIG. 2 is a table illustrating an example of a set value table stored in a storage unit according to the first comparative example.
FIG. 3 is a diagram illustrating an example of a set characteristic value display screen according to the first comparative example.
FIG. 4 is a diagram illustrating an example of a set characteristic value change screen according to the first comparative example.
FIG. 5 is a diagram illustrating an example of an update check screen according to the first comparative example.
FIG. 6 is a diagram illustrating an example of an updated set characteristic value display screen according to the first comparative example.
FIG. 7 is a flowchart illustrating an example of processes performed by a control unit according to the first comparative example.
FIG. 8 is a flowchart illustrating an example of a process of updating set characteristic values according to the first comparative example.
FIG. 9 is a diagram illustrating an example of a hardware configuration of a communication unit, a display unit, a storage unit, and a control unit of the electronic circuit breaker according to the first comparative example.
FIG. 10 is a diagram illustrating an example of a configuration of an electronic circuit breaker according to a second comparative example.
FIG. 11 is a flowchart illustrating an example of a process of updating set characteristic values performed by a control unit according to the second comparative example.
FIG. 12 is a flowchart illustrating an example of a process performed by the control unit according to the second comparative example when a power supply voltage is lowered.
FIG. 13 is a diagram illustrating an example of an error screen according to the second comparative example.
FIG. 14 is a diagram illustrating an example of a configuration of an electronic circuit breaker according to an embodiment.
FIG. 15 is a flowchart illustrating an example of a process of updating set characteristic values performed by a control unit according to the embodiment.
FIG. 16 is a diagram illustrating an example of an alarm screen according to the embodiment.
FIG. 17 is a diagram illustrating another example of an alarm screen according to the embodiment.
FIG. 18 is a diagram illustrating another example of a set characteristic value display screen according to the embodiment.

### Description of Comparative Examples and Embodiments

An electronic circuit breaker according to certain embodiments of the present invention will be described in detail below with reference to the drawings. Note that the present invention is not limited to the embodiments.

### First Comparative Example.

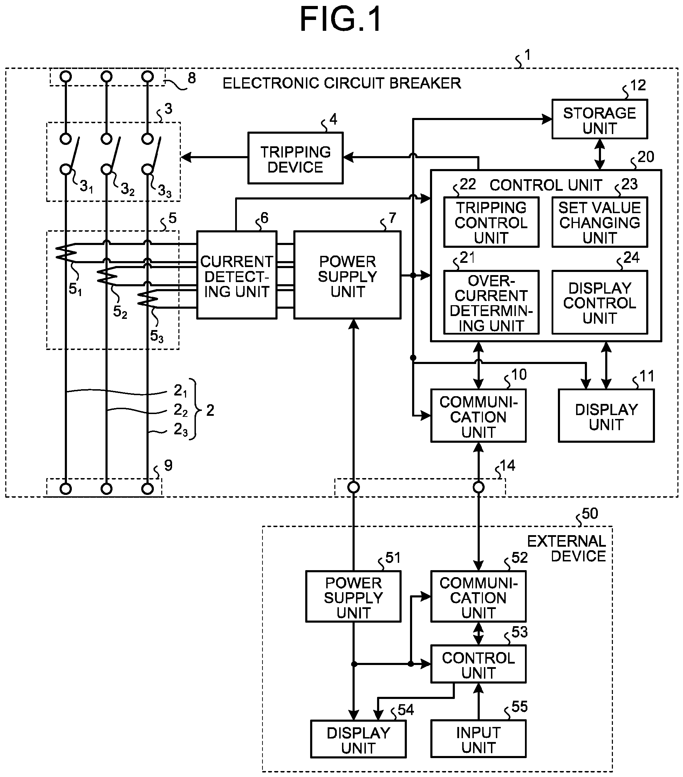

FIG. 1 is a diagram illustrating an example of a configuration of an electronic circuit breaker. As illustrated in FIG. 1, an electronic circuit breaker 1 includes switch contacts 3 that open and close three-phase alternating current cable runs 2, a tripping device 4 that opens the switch contacts 3, current transformers 5 having primary sides inserted in the respective cable runs 2, a current detecting unit 6 that detects currents through the cable runs 2, a power supply unit 7 that generates power supply voltage Vc1 from secondary side outputs of the current transformers 5, power supply side connection terminals 8 connected with power supply side conductors, which are not illustrated and to which AC voltage is applied from a power supply, and load side connection terminals 9 connected with load side conductors, which are not illustrated and which are connected with loads.

The electronic circuit breaker 1 also includes a communication unit 10 that communicates with an external device 50, a display unit 11 that displays parameter values that determine tripping characteristics, which are characteristics of tripping operation to open the switch contacts 3, and the like, a storage unit 12 that stores information used in the electronic circuit breaker 1, and a control unit 20 that controls the tripping device 4 and the display unit 11.

The switch contacts 3 include switch contacts 31 to 33 that respectively open and close three cable runs 2₁ to 2₃, which constitute the cable runs 2. The switch contacts 3₁ to 3₃ each include a fixed contact, which is not illustrated, and a movable contact, which is not illustrated. When the fixed contacts and the movable contacts of the respective switch contacts 31 to 33 come in contact with each other, the power supply side connection terminals 8 are electrically connected with the load side connection terminals 9. Consequently, currents flow through the respective cable runs 2₁ to 2₃, and the electronic circuit breaker 1 gets into a conducting state.

When the fixed contacts and the movable contacts of the respective switch contacts 3₁ to 3₃ leave each other, the switch contacts 3 are opened, and the power supply side connection terminals 8 are electrically disconnected from the load side connection terminals 9. Consequently, currents in the respective cable runs 2₁ to 2₃ are interrupted, and the electronic circuit breaker 1 gets into a non-conducting state. Hereinafter, the state in which the fixed contacts and the movable contacts are in contact with each other will be referred to as an on state of the switch contacts 3 or an on state of the electronic circuit breaker 1, and the state in which the fixed contacts and the movable contacts are separated from each other will be referred to as an off state of the switch contacts 3 or an off state of the electronic circuit breaker 1.

The tripping device 4 separates the fixed contacts and the movable contacts in the contact state from each other on the basis of a command from the control unit 20, to disconnect the cable runs 2₁ to 2₃ and thus bring the electronic circuit breaker 1 into the off state. The electronic circuit breaker 1 includes a make-and-break mechanism, which is not illustrated, for moving the movable contacts, and the tripping device 4 is capable of separating the fixed contacts and the movable contacts in the contact state from each other by acting on the make-and-break mechanism.

The current transformers 5 include current transformers 5₁ to 5₃ that are respectively inserted in the cable runs 2₁ to 2₃, which constitute the cable runs 2. The current transformers 5₁ to 53 output, from secondary windings, currents directly proportional to the currents flowing through the cable runs 2₁ to 2₃.

The current detecting unit 6 detects the value of current output from each of the secondary windings of the current transformers 5₁ to 5₃, and informs the control unit 20 of the detected current values. The values of currents detected by the current detecting unit 6 are instantaneous values, effective values, or mean values.

The power supply unit 7 generates the power supply voltage Vc1 by using currents output from the respective secondary windings of the current transformers 5₁ to 5₃. For example, the power supply unit 7 is capable of generating the power supply voltage Vc1 by rectifying the currents output from the respective secondary windings of the current transformers 5₁ to 5₃, combining the rectified currents, charging a capacitor with the resulting current, and stepping up or down the voltage of the capacitor. The power supply unit 7 supplies the power supply voltage Vc1 to the communication unit 10, the display unit 11, the storage unit 12, and the control unit 20. Note that the configuration of the power supply unit 7 is not limited to that described above, and may be any configuration that generates the power supply voltage Vcl by using the currents output from the respective secondary windings of the current transformers 5₁ to 5₃.

The communication unit 10 is a communication interface that communicates with the external device 50 by the frequency hopping spread spectrum method. The communication unit 10 is capable of receiving information transmitted from the external device 50, inputting the received information to the control unit 20, and transmitting information output from the control unit 20 to the external device 50. The communication method of the communication unit 10 is not limited to the frequency hopping spread spectrum method, and may be the direct spread spectrum method or a communication method other than spread spectrum methods.

The external device 50 that communicates with the electronic circuit breaker 1 will now be described. The external device 50 includes a power supply unit 51 that generates and outputs power supply voltage Vc2, a communication unit 52 that communicates with the electronic circuit breaker 1, a control unit 53 that controls the entire external device 50, a display unit 54 that displays a screen based on control performed by the control unit 53, and an input unit 55 that receives an input operation performed by an operator. The power supply voltage Vc2 output from the power supply unit 51 is supplied to the communication unit 52, the control unit 53, and the display unit 54.

The external device 50 can be connected with a connection terminal unit 14 of the electronic circuit breaker 1. The connection of the external device 50 with the connection terminal unit 14 causes the power supply voltage Vc2 of the power supply unit 51 to be supplied to the power supply unit 7 of the electronic circuit breaker 1 via the connection terminal unit 14, and causes the communication unit 52 to be communicably connected with the communication unit 10 of the electronic circuit breaker 1 via the connection terminal unit 14.

The description returns to the explanation of the electronic circuit breaker 1. The display unit 11 includes a display element, such as an electronic paper, capable of maintaining a displayed state in a state in which no power is supplied thereto. The display unit 11 is capable of rewriting the display screen on the basis of information output from the control unit 20 in a state in which the power supply voltage Vc1 is supplied from the power supply unit 7. In addition, the display unit 11 is capable of maintaining the state of the display screen while the supply of the power supply voltage Vcl from the power supply unit 7 is stopped.

The display unit 11 is thus capable of maintaining the displayed state even when the switch contacts 3 are in the off state. The display unit 11 is also capable of maintaining the displayed state even when the switch contacts 3 are in the on state and no currents flow through the cable runs 2.

The storage unit 12 stores set values of the aforementioned tripping characteristics. The storage unit 12 is a nonvolatile storage unit capable of holding information stored in a state in which no power is supplied thereto, such as a flash memory, for example.

The tripping characteristics are characteristics defined by the relation between the magnitude of an overcurrent flowing through the cable run 2 and a tripping operation time. The tripping characteristics of the electronic circuit breaker 1 have inverse time limit characteristics in which the operation time for the switch contacts 3 to open is shorter as the magnitudes of currents in excess of the rated current In in the cable runs 2 are larger. Herein, a region in which current is 115% or more of the rated current In and lower than short time limit tripping current Is is defined as a long time limit operation region, a region in which current is equal to or higher than the short time limit tripping current I_{S} and lower than instantaneous tripping current Ii is defined as a short time limit operation region, and a region in which current is equal to or higher than the instantaneous tripping current Ii is defined as an instantaneous operation region.

In the electronic circuit breaker 1, the rated current In, the short time limit tripping current Is, and the instantaneous tripping current Ii mentioned above, and a long time limit operation time T_{L} and a short time limit operation time Ts are stored as a plurality of parameter values that determine the tripping characteristics. In addition, pre-alarm pick up current I_{P} is also stored as a parameter value in the electronic circuit breaker 1. Hereinafter, the parameter values that determine the tripping characteristics may also be referred to as set characteristic values.

The rated current In is a rated value of currents flowing through the cable runs 2 in the electronic circuit breaker 1. The short time limit tripping current Is is a current value that determines the aforementioned inverse time limit characteristics, and is expressed as a percentage of the rated current In. The instantaneous tripping current Ii is a current value at which instantaneous tripping is performed, and is expressed as a percentage of the rated current In.

The short time limit operation time T_{S} is a time from when the value of current flowing through the cable run 2 reaches the short time limit operation region until when the tripping operation is completed in a case where a state in which the value of the current flowing through the cable run 2 is in the short time limit operation region continues. The long time limit operation time T_{L} is a time from when the value of the current flowing through the cable run 2 reaches the long time limit operation region until when the tripping operation is completed in a case where a state in which the value of the current flowing through the cable run 2 is in the long time limit operation region continues.

The pre-alarm pick up current Ip is a current value at which a pre-alarm function is started, and is expressed as a percentage of the rated current In. The pre-alarm function is a function of outputting an alarm when a load current that is current flowing through the cable run 2 exceeds the pre-alarm pick up current I_{P}. An example of the alarm of the pre-alarm function is an alarm signal output from a relay contact, which is not illustrated and is provided in the electronic circuit breaker 1, on the basis of control performed by the control unit 20.

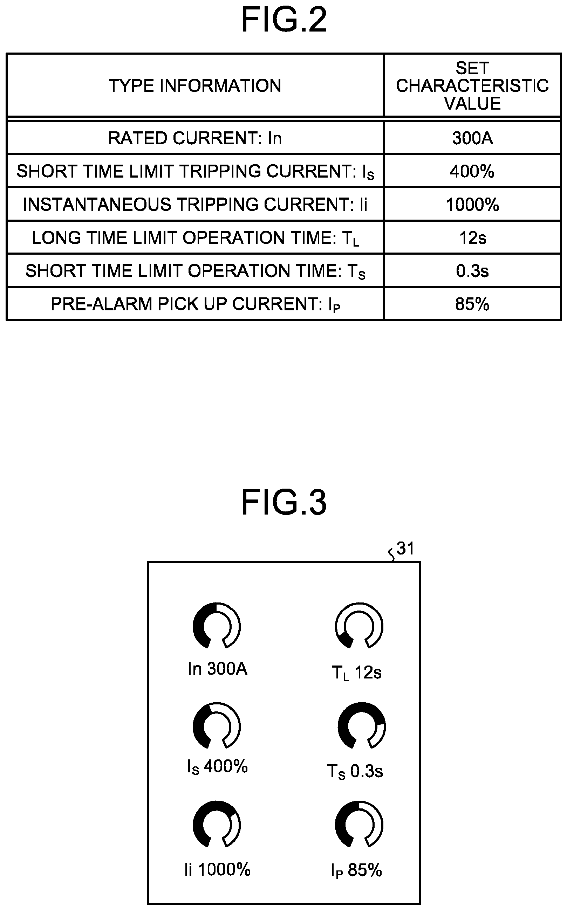

FIG. 2 is a table illustrating an example of a set value table stored in the storage unit of the electronic circuit breaker 1. As illustrated in FIG. 2, the set value table is information associating type information with the set characteristic values. The type information illustrated in FIG. 2 is information representing the type of a set value included in the tripping characteristics, and the set characteristic values illustrated in FIG. 2 are set values of the aforementioned tripping characteristics.

In the set value table illustrated in FIG. 2, the rated current In is set to 300 A, the short time limit tripping current Is is set to 400%, the instantaneous tripping current Ii is set to 1000%, the long time limit operation time T_{L} is set to 12 seconds, the short time limit operation time T_{S} is set to 0.3 seconds, and the pre-alarm pick up current Ip is set to 85%. Note that the set value table is not limited to the example illustrated in FIG. 2. In addition, the set characteristic values may be stored at preset addresses in the storage unit 12.

Referring back to FIG. 1, the description of the control unit 20 is continued. The control unit 20 includes an overcurrent determining unit 21 that determines an overcurrent through the cable run 2 on the basis of the value of current detected by the current detecting unit 6, a tripping control unit 22 that causes the tripping device 4 to open the switch contacts 3 when an overcurrent of the cable run 2 is determined by the overcurrent determining unit 21, a set value changing unit 23 that changes the set characteristic values stored in the storage unit 12, and a display control unit 24 that displays the set characteristic values stored in the storage unit 12, and the like on the display unit 11.

When supply of the power supply voltage Vc1 from the power supply unit 7 is started, the display control unit 24 reads the set characteristic values stored in the storage unit 12, generates information on a set characteristic value display screen including the read set characteristic values, and displays the set characteristic value display screen on the display unit 11. Because the display unit 11 has a nonvolatile display element, the set characteristic value display screen displayed on the display unit 11 by the display control unit 24 is maintained even after the supply of the power supply voltage Vc1 to the display unit 11 is stopped. Thus, the set characteristic values can be checked even while no currents flow through the cable runs 2, and the set characteristic values can be checked even while the switch contacts 3 are in the off state.

FIG. 3 is a diagram illustrating an example of a set characteristic value display screen of the electronic circuit breaker 1. A set characteristic value display screen 31 illustrated in FIG. 3 displays a plurality of set characteristic values including the rated current In, the short time limit tripping current Is, the instantaneous tripping current Ii, the long time limit operation time T_{L}, the short time limit operation time T_{S}, and the pre-alarm pick up current Ip.

In the example illustrated in FIG. 3, the respective set characteristic values are displayed in a form of arc-shaped icons, and a boundary position between a black part and a white part of each of the icons indicates the magnitude of the set characteristic value. Because the magnitude of a set characteristic value is larger as the area of the black part in the corresponding icon is larger, the set characteristic values are easily recognized in a manner similar to a case of a rotational position of a rotational variable resistance switch.

The electronic circuit breaker 1 is capable of updating the set characteristic values stored in the storage unit 12 from the external device 50. As described above, the connection of the external device 50 with the connection terminal unit 14 of the electronic circuit breaker 1 causes the power supply voltage Vc2 of the power supply unit 51 to be supplied to the power supply unit 7 of the electronic circuit breaker 1 via the connection terminal unit 14.

When the switch contacts 3 are in the off state or when the switch contacts 3 are in the on state and the cable runs 2 are in the non-conducting state, no currents are output from the secondary windings of the current transformers 51 to 53 to the power supply unit 7, but the power supply voltage Vc2 is output from the external device 50 to the power supply unit 7. This enables the power supply unit 7 to generate the power supply voltage Vc1 on the basis of the power supply voltage Vc2, and to cause the communication unit 10, the display unit 11, the storage unit 12, and the control unit 20 to operate on the basis of the power supply voltage Vc1.

In addition, the power supply unit 7 generates the power supply voltage Vc1 such that the magnitude of the power supply voltage Vc1 is equal to a reference value Vs. When currents flow through the cable runs 2 and the power supply voltage Vc2 is supplied from the external device 50, the power supply unit 7 can generate the power supply voltage Vc1 by using the higher of the value of the voltage generated by using the currents flowing through the cable runs 2 and the value of the power supply voltage Vc2. In addition, the power supply unit 7 may have such a configuration in which, when the power supply voltage Vc1 equal to the reference value Vs cannot be generated by using the currents flowing through the cable runs 2, the power supply unit 7 generates the power supply voltage Vc1 by using the power supply voltage Vc2 supplied from the external device 50.

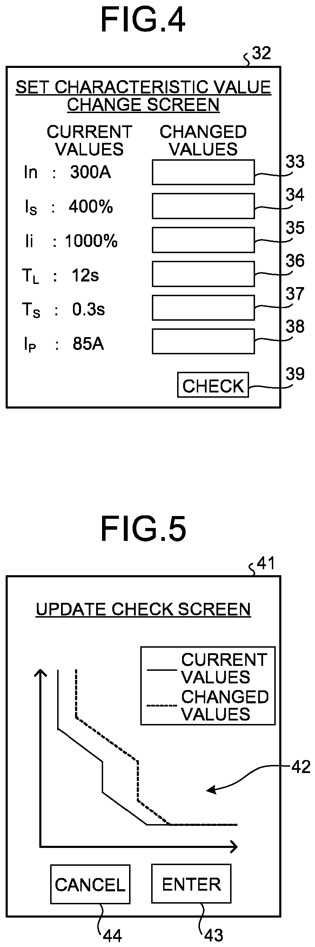

When the external device 50 is connected with the electronic circuit breaker 1, the display control unit 24 can output information on a set characteristic value change screen to the display unit 11 to display the set characteristic value change screen on the display unit 11. FIG. 4 is a diagram illustrating an example of a set characteristic value change screen of the electronic circuit breaker 1.

A set characteristic value change screen 32 illustrated in FIG. 4 displays input boxes 33 to 38 for entering respective changed values of the rated current In, the short time limit tripping current I_{S}, the instantaneous tripping current Ii, the long time limit operation time T_{L}, the short time limit operation time Ts, and the pre-alarm pick up current Ip, and a check button 39 for checking an operating characteristic curve obtained with the changed values input in the input boxes 33 to 38.

The operator inputs changed values of the set characteristic values into the input boxes 33 to 38 through input operation to the input unit 55 of the external device 50, so that the set value changing unit 23 causes the display unit 11 to display the changed values of the set characteristic values in the input boxes 33 to 38.

When the operator selects the check button 39 through input operation to the input unit 55 of the external device 50, the set value changing unit 23 informs the display control unit 24 of the changed values of the set characteristic values input in the input boxes 33 to 38. The display control unit 24 generates information on an update check screen including the operating characteristic curve of the changed set characteristic values on the basis of the changed values of the set characteristic values of which the display control unit 24 is informed by the set value changing unit 23. The set value changing unit 23 then causes the display unit 11 to display the update check screen.

FIG. 5 is a diagram illustrating an example of an update check screen of the electronic circuit breaker 1. An update check screen 41 illustrated in FIG. 5 displays a graph 42, an enter button 43, and a cancel button 44. The graph 42 includes a current operating characteristic curve and an operating characteristic curve of the changed set characteristic values. The vertical axis of the graph 42 represents the tripping operation time, and the horizontal axis of the graph 42 represents the magnitude of an overcurrent flowing through the cable run 2. The graph 42 enables the operator to easily know the tripping characteristics before and after a change.

When the operator operates the enter button 43, the set value changing unit 23 is informed of update confirmation information indicating the operation of the enter button 43 by the external device 50. Upon being informed of the update confirmation information, the set value changing unit 23 stores the changed values of the set characteristic values input in the input boxes 33 to 38 into the storage unit 12 to update the set characteristic values stored in the storage unit 12.

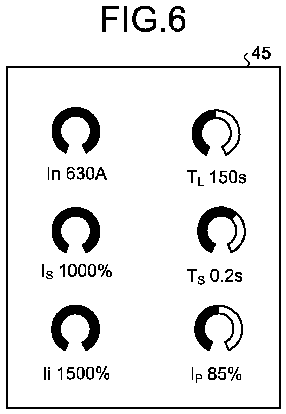

When the set characteristic values stored in the storage unit 12 are updated by the set value changing unit 23, the display control unit 24 generates information on a set characteristic value display screen including the updated set characteristic values and displays the set characteristic value display screen on the display unit 11. FIG. 6 is a diagram illustrating an example of an updated set characteristic value display screen of the electronic circuit breaker 1. A set characteristic value display screen 45 illustrated in FIG. 6 displays a state in which the set values other than the pre-alarm pick up current Ip are changed from the state of the set characteristic value display screen 31 illustrated in FIG. 3.

In addition, when the operator operates the cancel button 44, the set value changing unit 23 is informed of cancellation information indicating the operation of the cancel button 44 by the external device 50. Upon being informed of the cancellation information, the set value changing unit 23 deletes the changed values of the set characteristic values that are held, and requests the display control unit 24 to display the set characteristic value change screen on the display unit 11. The display control unit 24 displays the set characteristic value change screen on the display unit 11 on the basis of the request from the set value changing unit 23.

Alternatively, the set value changing unit 23 can request the display control unit 24 to display, on the display unit 11, the set characteristic value change screen including the changed values of the set characteristic values that are held without deleting the changed values of the set characteristic values that are held. This enables the operator to work on changing the set characteristic values from a state with changed values as previously input.

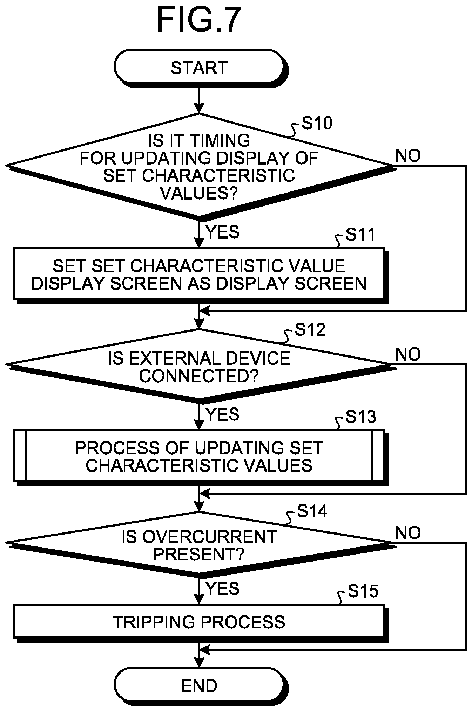

Next, operation of the control unit 20 will be explained with reference to flowcharts. FIG. 7 is a flowchart illustrating an example of processes performed by the control unit 20 of the electronic circuit breaker 1.

As illustrated in FIG. 7, the control unit 20 determines whether or not it is a timing for updating display of set characteristic values (step S10). The timing for updating display of the set characteristic values is a timing when supply of the power supply voltage Vc1 from the power supply unit 7 is started and the control unit 20 thus starts operating, or a timing when the set characteristic values stored in the storage unit 12 are updated, for example.

If it is determined to be the timing for updating display of the set characteristic values (step S10: Yes), the control unit 20 sets a set characteristic value display screen as the display screen of the display unit 11 (step S11). In step S11, the control unit 20 sets the set characteristic value display screen as the display screen of the display unit 11 by reading the set characteristic values stored in the storage unit 12 and rewriting the display screen of the display unit 11 to the set characteristic value display screen on the basis of the read set characteristic values. Note that, even when the display screen of the display unit 11 is a set characteristic value display screen, the control unit 20 overwrites the display screen of the display unit 11 by outputting information on the set characteristic value display screen based on the read set characteristic values to the display unit 11.

When the process in step S11 is terminated or if it is determined not to be the timing for updating display of the set characteristic values (step S10: No), the control unit 20 determines whether or not the external device 50 is connected (step S12). In step S12, the control unit 20 determines that the external device 50 is connected when communication with the external device 50 via the communication unit 10 is enabled.

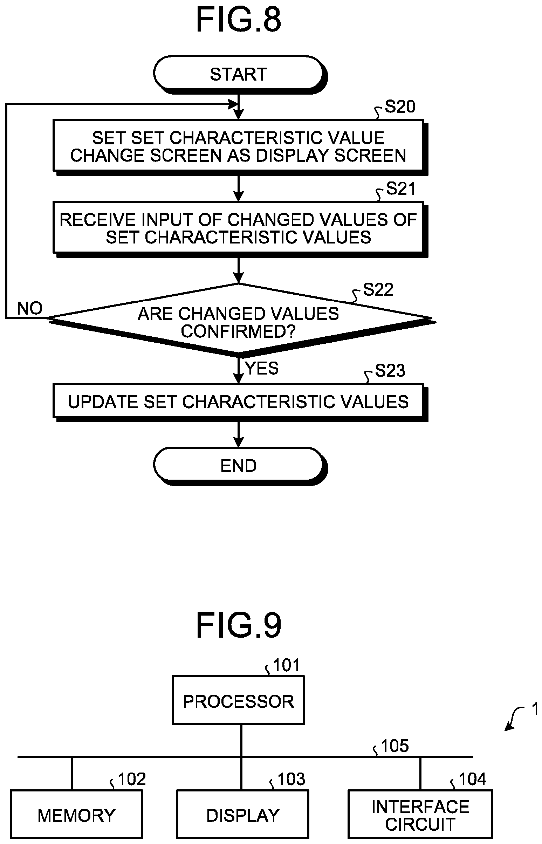

If the external device 50 is determined to be connected (step S12: Yes), the control unit 20 performs a process of updating the set characteristic values (step S13). The process of updating the set characteristic values in step S13 is a process in which the control unit 20 updates the set characteristic values stored in the storage unit 12 on the basis of information transmitted from the external device 50, and corresponds to processes in steps S20 to S23 in FIG. 8.

When the process in step S13 is terminated or if the external device 50 is determined not to be connected (step S12: No), the control unit 20 determines whether or not an overcurrent is present in the cable runs 2 (step S14). If an overcurrent is determined to be present (step S14: Yes), the control unit 20 performs a tripping process (step S15). The tripping process in step S15 is performed by controlling the tripping device 4 on the basis of the set characteristic values stored in the storage unit 12.

For example, in a case where the set value table stored in the storage unit 12 is in the state illustrated in FIG. 2, the control unit 20 causes the tripping devices 4 to open the switch contacts 3 when an overcurrent of 400% of the rated current In flows through the cable run 2 for 0.3 seconds or longer. In this manner, the tripping device 4 is controlled on the basis of the set characteristic values stored in the storage unit 12.

When the process in step S15 is terminated or if it is determined that no overcurrent is present (step S14: No), the control unit 20 terminates the processes illustrated in FIG. 7. Note that the control unit 20 repeats the processes illustrated in FIG. 7. In addition, the control unit 20 can also perform the processes in steps S10 and S11, the processes in steps S12 and S13, and the processes in steps S14 and S15 in parallel with each other.

FIG. 8 is a flowchart illustrating an example of the process of updating the set characteristic values in step S13. As illustrated in FIG. 8, the control unit 20 sets a set characteristic value change screen as the display screen of the display unit 11 (step S20). The control unit 20 sets the set characteristic value change screen as the display screen of the display unit 11 by rewriting the display screen of the display unit 11 to the set characteristic value change screen. Thereafter, the control unit 20 performs a process of receiving input of changed values of the set characteristic values (step S21).

The control unit 20 determines whether or not the changed values of the set characteristic values are confirmed (step S22). In step S22, the control unit 20 determines that the changed values are confirmed when the enter button 43 is operated, and determines that the changed values are not confirmed when the cancel button 44 is operated. If the changed values are determined not to be confirmed (step S22: No), the control unit 20 returns to the process in step S20.

If the changed values are determined to be confirmed (step S22: Yes), the control unit 20 stores the changed values of the set characteristic values into the storage unit 12 to update the set characteristic values stored in the storage unit 12 (step S23), and terminates the process illustrated in FIG. 8.

FIG. 9 is a diagram illustrating an example of a hardware configuration of the communication unit 10, the display unit 11, the storage unit 12, and the control unit 20 of the electronic circuit breaker 1. As illustrated in FIG. 9, the electronic circuit breaker 1 is a computer including a processor 101, a memory 102, a display 103, and an interface circuit 104. The processor 101, the memory 102, the display 103, and the interface circuit 104 are capable of transmitting and receiving data to and from each other via a bus 105. The communication unit 10 is implemented by the interface circuit 104, the display unit 11 is implemented by the display 103, and the storage unit 12 is implemented by the memory 102.

The processor 101 implements the functions of the overcurrent determining unit 21, the tripping control unit 22, the set value changing unit 23, and the display control unit 24 by reading and executing an OS and processing programs stored in the memory 102. Note that the processor 101 can also read an OS and processing programs from one or more storage media including a magnetic disk, a universal serial bus (USB) memory, an optical disk, a compact disc, and a digital versatile disc (DVD) via an interface, which is not illustrated, store the read OS and processing programs in the memory 102, and execute the stored OS and processing programs. An optical disk, a compact disc, and a DVD are recording media in which computerreadable programs are recorded.

The processor 101 is an example of a processing circuit and includes one or more of a CPU, a digital signal processor (DSP), and a system large scale integration (LSI). The memory 102, which is a storage area used as a work area of the processor 101, is a nonvolatile or volatile semiconductor memory typified by a random access memory (RAM).

As described above, the electronic circuit breaker 1 includes the switch contacts 3 for opening and closing the cable runs 2, the current detecting unit 6 that detects currents flowing through the cable runs 2, the tripping device 4 that opens the switch contacts 3, the communication unit 10 that receives set characteristic values from the external device 50, the display unit 11 capable of displaying the set characteristic values, and the control unit 20 that controls the tripping device 4 on the basis of the currents detected by the current detecting unit 6 and the set characteristic values, and displays the set characteristic values on the display unit 11. As a result, it is not necessary to provide a space for placing a setting unit for setting and displaying the tripping characteristics in the electronic circuit breaker 1. In addition, because the set characteristic values are displayed on the display unit 11 located in the electronic circuit breaker 1, the set characteristic values can be checked even in the state in which the external device 50 is not connected.

Furthermore, the electronic circuit breaker 1 includes the power supply unit 7 that generates the power supply voltage Vc1 for driving the display unit 11, the communication unit 10, and the control unit 20 by using currents flowing through the cable runs 2. In addition, the display unit 11 is capable of maintaining a displayed state in the state in which the power supply voltage Vc1 is not supplied from the power supply unit 7, that is, in the state in which no power is supplied thereto. Thus, even while no currents flow through the cable runs 2 and no power necessary for driving the display unit 11 is supplied thereto, the display unit 11 is capable of maintaining the state in which the set characteristic values are displayed.

In addition, in the state in which no currents flow through the cable runs 2, the power supply unit 7 generates the power supply voltage Vc1 on the basis of voltage supplied from the external device, i.e., on the basis of the power supply voltage Vc2 supplied from the external device 50 that generates power supply voltage. As a result, whether or not the cable runs 2 are in the conducting state, the set characteristic values can be received from the external device 50 and displayed on the display unit 11 or can be updated.

### Second Comparative Example.

A second comparative example is different from the first comparative example in that, when power supply voltage output from the power supply unit of the electronic circuit breaker becomes low, the display screen is changed and a process of updating set characteristic values is stopped. Hereinafter, components having similar functions to those in the first comparative example will be represented by the same reference numerals, the description thereof will not be repeated, and the description will be focused on the difference from the electronic circuit breaker 1 of the first comparative example.

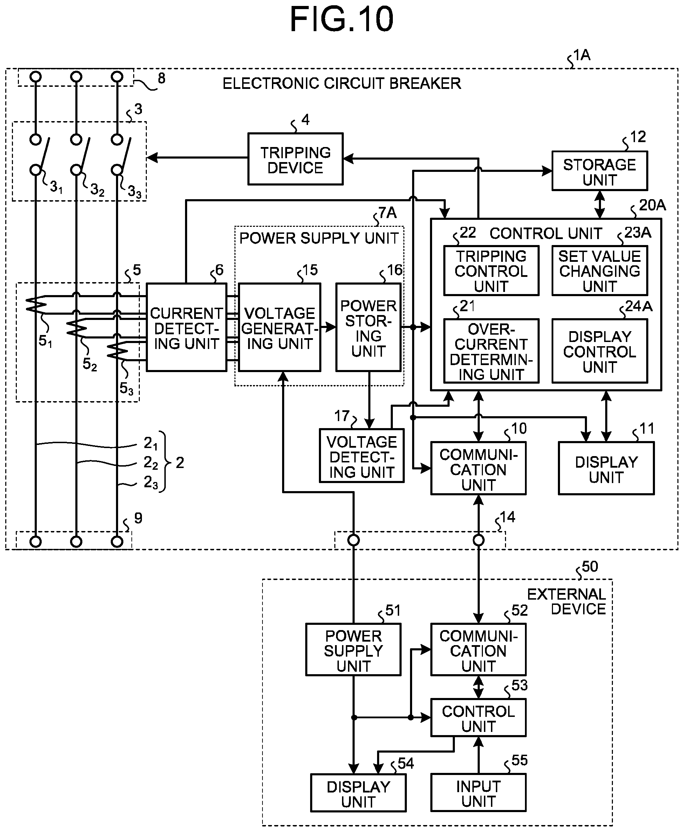

FIG. 10 is a diagram illustrating an example of a configuration of an electronic circuit breaker according to the second comparative example. As illustrated in FIG. 10, an electronic circuit breaker 1A is different from the electronic circuit breaker 1 in that the electronic circuit breaker 1A includes a power supply unit 7A, a voltage detecting unit 17, and a control unit 20A instead of the power supply unit 7 and the control unit 20.

The power supply unit 7A includes a voltage generating unit 15 that generates the power supply voltage Vc1, and a power storing unit 16 that stores power on the basis of the power supply voltage Vc1 output from the voltage generating unit 15. The voltage generating unit 15 has a configuration similar to that of the power supply unit 7. The power storing unit 16 includes a capacitor to which the power supply voltage Vc1 from the voltage generating unit 15 is applied, and power is stored in the capacitor.

In a case where the external device 50 is connected with the electronic circuit breaker 1A when the switch contacts 3 are in the off state, the power of the power supply unit 51 of the external device 50 is supplied to the power supply unit 7A, and the voltage of the power storing unit 16 increases. Thus, the power supply voltage Vc1 output from the power supply unit 7A increases, bringing the communication unit 10 and the control unit 20A into an operable state, and communication between the control unit 20A and the external device 50 is started via the communication unit 10.

The capacitance of the capacitor of the power storing unit 16 is set to such a value with which, in a case where the external device 50 is disconnected from the electronic circuit breaker 1A when the switch contacts 3 are in the off state, the time from when the power supply voltage Vc1 output from the power storing unit 16 becomes equal to or lower than a threshold Vth1 until when the power supply voltage Vcl becomes smaller than a threshold Vth2 is equal to or longer than a preset time Ta. The preset time Ta is several to several tens of milliseconds, for example. In addition, the threshold Vth1 is a value smaller than the reference value Vs and larger than the threshold Vth2.

Note that the power supply unit 7A is not limited to the configuration illustrated in FIG. 10. For example, in a case where the voltage generating unit 15 is configured to rectify the currents output from the respective secondary windings of the current transformers 5₁ to 5₃, combine the rectified currents, charge the capacitor with the resulting current, and step up or down the voltage of the capacitor, the capacitor of the voltage generating unit 15 can correspond to the power storing unit 16. In this case, the capacitance of the capacitor of the voltage generating unit 15 that functions as the power storing unit 16 is set to such a value with which, in the case where the external device 50 is disconnected from the electronic circuit breaker 1A when the switch contacts 3 are in the off state, the time from the timing when the power supply voltage Vc1 output from the power storing unit 16 becomes equal to or lower than the threshold Vth1 until the timing when the power supply voltage Vc1 becomes smaller than the threshold Vth2 is equal to or longer than the preset time Ta. In this manner, the power supply unit 7A may have a configuration in which the power storing unit 16 is provided in the voltage generating unit 15.

The voltage detecting unit 17 detects the power supply voltage Vc1 output from the power supply unit 7A. The power supply voltage Vc1 detected by the voltage detecting unit 17 is an instantaneous value or a mean value of the power supply voltage Vc1.

The control unit 20A includes the overcurrent determining unit 21, the tripping control unit 22, a set value changing unit 23A, and a display control unit 24A. The set value changing unit 23A does not perform the process of changing the set characteristic values when the power supply voltage Vc1 is equal to or lower than the threshold Vth₁, and halts the process of changing the set characteristic values when the power supply voltage Vc1 has become equal to or lower than the threshold Vth1 from a state higher than the threshold Vth1 while the process of changing the set characteristic values is performed.

When the power supply voltage Vc1 has become equal to or lower than the threshold Vth1 from the state higher than the threshold Vth₁, the display control unit 24A reads the set characteristic values stored in the storage unit 12, generates information on a set characteristic value display screen including the read set characteristic values, and displays the set characteristic value display screen on the display unit 11.

When the switch contacts 3 in the electronic circuit breaker 1A are in the on state, load currents are flowing through the cable runs 2, and thus currents directly proportional to the load currents are supplied from the secondary sides of the current transformers 5 to the power supply unit 7A. The power supply unit 7A can therefore generate the power supply voltage Vc1 higher than the threshold Vth1. In the state in which the power supply voltage Vc1 higher than the threshold Vth1 is supplied to the communication unit 10, the display unit 11, the storage unit 12, and the control unit 20A, the process of changing the set characteristic values can be performed.

The display control unit 24A can rewrite the display screen of the display unit 11 to a display screen of a different type on the basis of a request from the external device 50 input via the communication unit 10. The types of the display screen include one or more cable run state display screens in addition to the set characteristic value display screen, the set characteristic value change screen, and the update check screen described above.

A cable run state display screen includes at least one of measured values of the load currents that are currents flowing through the cable runs 2, measured values of the voltages of the cable runs 2, and measured values of power consumptions that are powers consumed by loads via the cable runs 2. Note that the electronic circuit breaker 1A includes a voltage detecting unit, which is not illustrated, for detecting the voltages of the cable runs 2, and that the control unit 20A is capable of acquiring measured values of the voltages of the cable runs 2 from the not-illustrated voltage detecting unit and acquiring measured values of the load currents flowing through the cable runs 2 from the current detecting unit 6. The control unit 20A is also capable of acquiring the measured values of the power consumptions from the measured values of the voltages and the measured values of the currents.

The electronic circuit breaker 1A can be provided with a switching button, which is not illustrated, as an operation unit for switching between a set characteristic value display screen and a cable run state display screen or switching between cable run state display screens. Upon detecting that the operator has operated the switching button, the control unit 20A can perform the aforementioned switching. In addition, the control unit 20A can perform the aforementioned switching on the basis of a request from the external device 50.

When the currents supplied to the power supply unit 7A have lowered because the load currents, which are currents flowing through the cable runs 2, have lowered, the power supply voltage Vc1 lowers and may become equal to or lower than the threshold Vth1. In this case, the display control unit 24A rewrites the display screen of the display unit 11 to a set characteristic value display screen before the power supply voltage Vc1 becomes lower than the threshold Vth2. This prevents the display screen of the display unit 11 from being maintained in a state other than the set characteristic value display screen, for example.

The display control unit 24A and the display unit 11 can operate when the power supply voltage Vc1 is equal to or higher than the threshold Vth2, and the power storing unit 16 holds power for a period from when the power supply voltage Vc1 becomes equal to or lower than the threshold Vth1 until when the power supply voltage Vcl becomes smaller than the threshold Vth2. Thus, in a case where the load currents lower rapidly, the power supply voltage Vc1 lowers rapidly to a voltage lower than the threshold Vth2 if the power storing unit 16 is not present. In contrast, in the power supply unit 7A, even when the load currents lower rapidly, the power supply voltage Vc1 is equal to or higher than the threshold Vth2 for the preset time Ta or longer after the timing when the power supply voltage Vc1 has become equal to or lower than the threshold Vth1. As a result, the display control unit 24A is capable of rewriting the display screen of the display unit 11 to a set characteristic value display screen regardless of the extent to which the load currents are lowered.

In addition, even when the switch contacts 3 of the electronic circuit breaker 1A are in the off state, if the external device 50 is connected, the power supply voltage Vc2 is supplied from the external device 50 to the power supply unit 7A and the power supply voltage Vc1 is thus continuously output from the power supply unit 7A.

There are, however, cases where the connection between the power supply unit 51 of the external device 50 and the electronic circuit breaker 1A is disconnected while set characteristic values are being changed and where the connection between the power supply unit 51 of the external device 50 and the electronic circuit breaker 1A is intermittently interrupted owing to contact failure between the power supply unit 51 of the external device 50 and the connection terminal unit 14. In such a case, there is a period during which the power supply voltage Vc2 is not supplied to the power supply unit 7A, and the power supply voltage Vc1 therefore lowers.

Even in such a case, the display control unit 24A rewrites the display screen of the display unit 11 to a set characteristic value display screen before the power supply voltage Vc1 becomes lower than the threshold Vth2, as described above. This prevents the display screen of the display unit 11 from being maintained in a state other than the set characteristic value display screen.

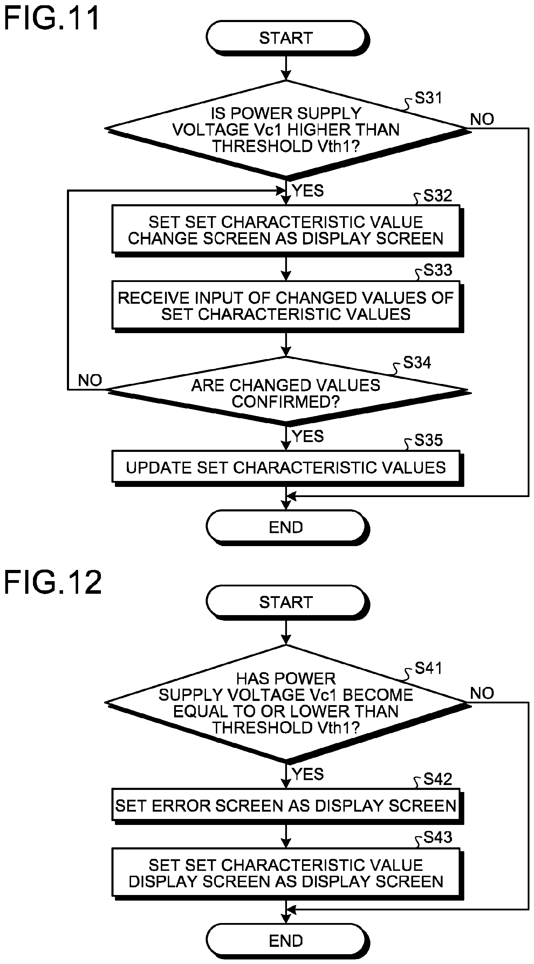

Next, operation of the control unit 20A will be explained with reference to flowcharts. In the following description, the operation of the control unit 20A different from that of the control unit 20 will be mainly explained. FIG. 11 is a flowchart illustrating an example of a process of updating set characteristic values performed by the control unit according to the second comparative example.

As illustrated in FIG. 11, the control unit 20A determines whether or not the power supply voltage Vc1 is higher than the threshold Vth1 (step S31). If the power supply voltage Vc1 is determined to be higher than the threshold Vth1 (step S31: Yes), the control unit 20A proceeds to the process in step S32. The processes in steps S32 to S35 are similar to those in steps S20 to S23 illustrated in FIG. 8.

If the power supply voltage Vc1 is determined not to be higher than the threshold Vth1 (step S31: No) or when the process in step S35 is terminated, the control unit 20A terminates the process illustrated in FIG. 11.

As described above, the control unit 20A does not change the display screen of the display unit 11 in the state in which the power supply voltage Vc1 is equal to or lower than the threshold Vth1, and changes the display screen of the display unit 11 when the power supply voltage Vc1 has become higher than the threshold Vth1. This enables the display screen of the display unit 11 to be changed in a state in which the power supply voltage Vc1 is stable.

In addition, the control unit 20A halts the process illustrated in FIG. 11 when the power supply voltage Vc1 has become equal to or lower than the threshold Vth1 during the processes in steps S32 to S35. This prevents the set characteristic values from being set to erroneous values by malfunction due to lowering of the power supply voltage Vc1.

FIG. 12 is a flowchart illustrating an example of a process performed by the control unit according to the second comparative example when the power supply voltage is lowered, which is a process repeated by the control unit 20A. As illustrated in FIG. 12, the control unit 20A determines whether or not the power supply voltage Vc1 has become equal to or lower than the threshold Vth1 (step S41).

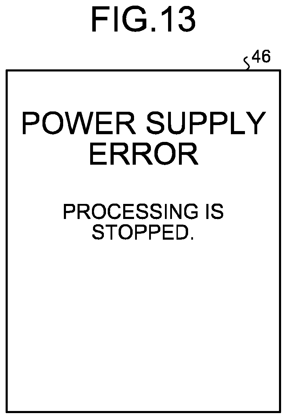

If the power supply voltage Vc1 is determined to have become equal to or lower than the threshold Vth1 (step S41: Yes), the control unit 20A sets an error screen as the display screen of the display unit 11 (step S42). In step S42, the control unit 20A sets the error screen as the display screen of the display unit 11 by rewriting the display screen of the display unit 11 to the error screen. FIG. 13 is a diagram illustrating an example of the error screen. An error screen 46 illustrated in FIG. 13 displays words indicating power failure and words indicating that the processing is stopped.

After setting the error screen as the display screen, the control unit 20A sets a set characteristic value display screen as the display screen within the preset time Ta from when the power supply voltage Vc1 has become equal to or lower than the threshold Vth1 (step S43). In step S43, the control unit 20A sets the set characteristic value display screen as the display screen by rewriting the display screen of the display unit 11 to the set characteristic value display screen on the basis of the set characteristic values read from the storage unit 12 in a manner similar to the process in step S11.

If the power supply voltage Vc1 is determined not to have become equal to or lower than the threshold Vth1 (step S41: No) or when the process in step S43 is terminated, the control unit 20A terminates the process illustrated in FIG. 12.

As described above, the control unit 20A rewrites the display screen of the display unit 11 to a set characteristic value display screen displaying the set characteristic values stored in the storage unit 12 when the power supply voltage Vc1 has become equal to or lower than the threshold Vth1. This enables the set characteristic values and the values displayed on the display unit 11 to be coincident with each other in the case where the power supply voltage Vc1 is lowered while the operator is carrying out the process of updating the set characteristic values.

In addition, in the case where changed values of the set characteristic values input by the operator during the process of updating the set characteristic values are to be stored into the storage unit 12, the control unit 20A stores the changed values of the set characteristic values without deleting the currently applied set characteristic values until the update process is confirmed. When the operator has confirmed the process of updating the set characteristic values, the control unit 20A can delete the currently applied set characteristic values from the storage unit 12 and use the changed values of the set characteristic values stored in the storage unit 12 as the updated set characteristic values.

Then, in the case where the power supply voltage Vc1 has become equal to or lower than the threshold Vth1 before the operator confirms the process of updating the set characteristic values, the control unit 20A reads the currently applied set characteristic values from the storage unit 12 instead of the changed values of the set characteristic values. The control unit 20A can rewrite the display screen of the display unit 11 to the set characteristic value display screen displaying the read set characteristic values.

Note that, in the case where the power supply voltage Vc1 has become equal to or lower than the threshold Vth1 before the operator confirms the process of updating the set characteristic values, the control unit 20A does not delete the changed values of the set characteristic values stored in the storage unit 12. Then, when the operator carries out the process of updating the set characteristic values again, a set characteristic value change screen including the changed values of the set characteristic values stored in the storage unit 12 can be displayed on the display unit 11. As a result, the burden on the operator in the process of updating the set characteristic values can be reduced. Note that, in the case where the power supply voltage Vc1 has become equal to or lower than the threshold Vth1 before the operator confirms the process of updating the set characteristic values, the control unit 20A can also delete the changed values of the set characteristic values stored in the storage unit 12.

Note that an example of the hardware configuration of the communication unit 10, the display unit 11, the storage unit 12, and the control unit 20A of the electronic circuit breaker 1A is the same as that illustrated in FIG. 9. The processor 101 can implement the functions of the overcurrent determining unit 21, the tripping control unit 22, the set value changing unit 23A, and the display control unit 24A by reading and executing programs stored in the memory 102 that functions as the storage unit 12.

As described above, the power supply unit 7A of the electronic circuit breaker 1A includes the power storing unit 16 that stores power on the basis of the currents flowing through the cable runs 2 or the power supply voltage Vc2 supplied from the external device 50, and outputs the power supply voltage Vc1 on the basis of the power stored in the power storing unit 16 when current flowing through the cable run 2 or the power supply voltage Vc2 supplied from the external device 50 is lowered. The control unit 20A determines whether or not the power supply voltage Vc1 has become equal to or lower than the threshold Vth1, and performs a process of displaying the set characteristic values on the display unit 11 if the power supply voltage Vc1 is determined to have become equal to or lower than the threshold Vth1. As a result, in a state in which a load current is lowered or in a case where the switch contacts 3 is in the off state and the external device 50 is not connected, the display screen of the display unit 11 can be prevented from being maintained in a state other than the set characteristic value display screen.

### Embodiment.

An embodiment of the present invention is different from the second comparative example in that a change in set characteristic values is permitted on the basis of a closing state of the electronic circuit breaker. Hereinafter, components having similar functions to those in the second comparative example will be represented by the same reference numerals, the description thereof will not be repeated, and the description will be focused on the difference from the electronic circuit breaker 1A of the second comparative example.

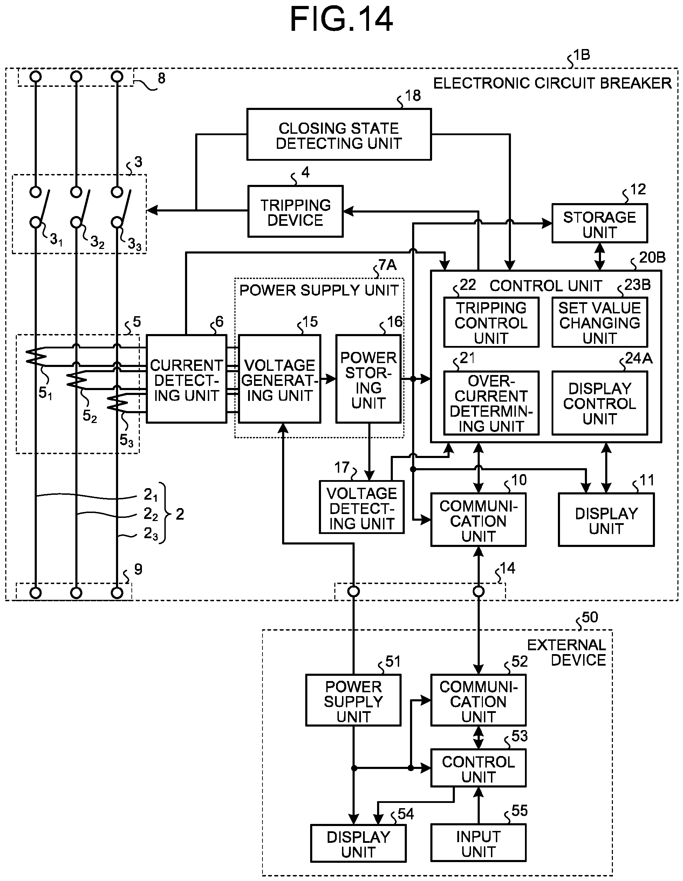

FIG. 14 is a diagram illustrating an example of a configuration of an electronic circuit breaker according to the embodiment. As illustrated in FIG. 14, an electronic circuit breaker 1B according to the embodiment is different from the electronic circuit breaker 1A in that the electronic circuit breaker 1B includes a closing state detecting unit 18 and a control unit 20B instead of the control unit 20A.

The closing state detecting unit 18 detects the closing state of the electronic circuit breaker 1B, and informs the control unit 20B of the detection. The closing state of the electronic circuit breaker 1B includes an on state, an off state, and a tripped state. The on state of the electronic circuit breaker 1B means that the switch contacts 3 are in the on state. The off state of the electronic circuit breaker 1B means that the switch contacts 3 are brought into the off state by a manual lever, which is not illustrated, of the electronic circuit breaker 1B. The tripped state of the electronic circuit breaker 1B means that the switch contacts 3 are brought into the off state by the tripping device 4.

The control unit 20B includes the overcurrent determining unit 21, the tripping control unit 22, a set value changing unit 23B, and the display control unit 24A. The set value changing unit 23B does not perform the process of changing set characteristic values when the closing state of the electronic circuit breaker 1B is the on state, and performs the process of changing set characteristic values when the closing state of the electronic circuit breaker 1B is the off state or the tripped state. As a result, the operator cannot change the set characteristic values while the cable runs 2 are in the conducting state, which can prevent occurrence of unnecessary operation.

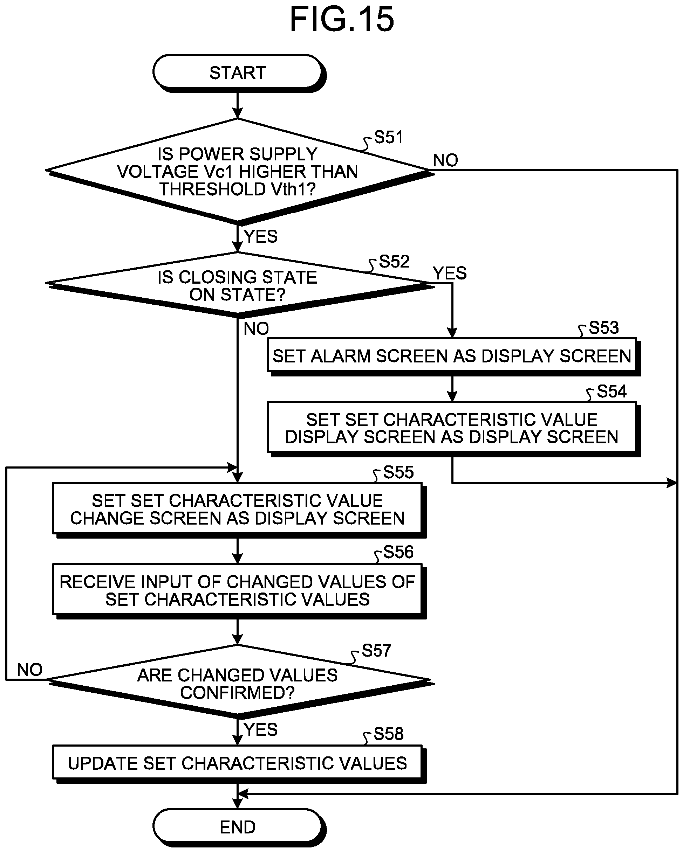

Next, operation of the control unit 20B will be explained with reference to a flowchart. In the following description, the operation of the control unit 20B different from that of the control unit 20A will be mainly explained. FIG. 15 is a flowchart illustrating an example of a process of updating set characteristic values performed by the control unit according to the embodiment.

As illustrated in FIG. 15, the control unit 20B determines whether or not the power supply voltage Vc1 is higher than the threshold Vth1 (step S51). If the power supply voltage Vc1 is determined to be higher than the threshold Vth1 (step S51: Yes), the control unit 20B determines whether or not the closing state of the electronic circuit breaker 1B is the on state (step S52).

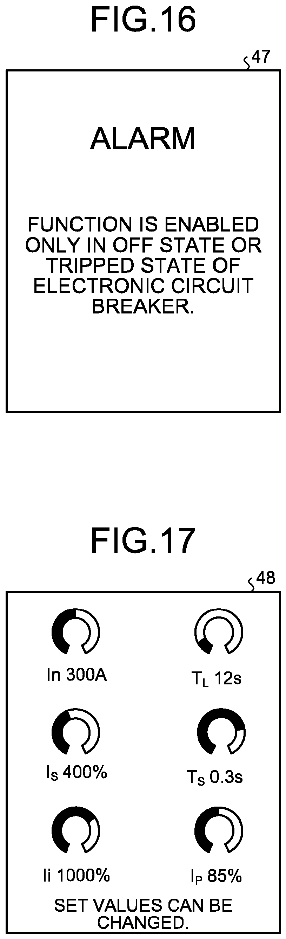

If the closing state of the electronic circuit breaker 1B is determined to be the on state (step S52: Yes), the control unit 20B sets an alarm screen as the display screen of the display unit 11 by rewriting the display screen of the display unit 11 to an alarm screen and displaying the alarm screen on the display unit 11 (step S53). In step S53, the control unit 20B sets the alarm screen as the display screen of the display unit 11 by rewriting the display screen of the display unit 11 to the alarm screen. FIG. 16 is a diagram illustrating an example of an alarm screen. An alarm screen 47 illustrated in FIG. 16 includes information indicating that a change in the set characteristic values is not permitted.

After setting the alarm screen as the display screen, the control unit 20B sets a set characteristic value display screen as the display screen (step S54). In step S54, the control unit 20B sets the set characteristic value display screen as the display screen by rewriting the display screen of the display unit 11 to the set characteristic value display screen on the basis of the set characteristic values read from the storage unit 12 in a manner similar to the process in step S43.

If the closing state of the electronic circuit breaker 1B is determined not to be the on state (step S52: No), the control unit 20B proceeds to the process in step S55. The processes in steps S55 to S58 are similar to those in steps S20 to S23 illustrated in FIG. 8. If the power supply voltage Vc1 is determined not to be higher than the threshold Vth1 (step S51: No) or when the process in step S58 is terminated, the control unit 20B terminates the process illustrated in FIG. 15.

As described above, the control unit 20B is capable of preventing the process of changing set characteristic values when the closing state of the electronic circuit breaker 1B is the on state. This can avoid, when the closing state of the electronic circuit breaker 1B is the on state, unnecessary tripping operation performed by the electronic circuit breaker 1B owing to a change in the set characteristic values.

Note that the control unit 20B may be configured not to permit set characteristic values to become smaller but to permit set characteristic values to become larger when the closing state of the electronic circuit breaker 1B is the on state.

In addition, an example of the hardware configuration of the communication unit 10, the display unit 11, the storage unit 12, and the control unit 20B of the electronic circuit breaker 1B according to the embodiment is the same as that illustrated in FIG. 9. The processor 101 can implement the functions of the overcurrent determining unit 21, the tripping control unit 22, the set value changing unit 23B, and the display control unit 24A by reading and executing programs stored in the memory 102 that functions as the storage unit 12.

As described above, the control unit 20B of the electronic circuit breaker 1B according to the embodiment determines whether or not the switch contacts 3 are in an open state, and permits a change in set characteristic values from the external device 50 when the switch contacts 3 are determined to be in the open state. As a result, because the operator cannot change set characteristic values while the cable runs 2 are in the conducting state, occurrence of unnecessary tripping operation in the electronic circuit breaker 1B can be prevented.

If the switch contacts 3 are determined not to be in the open state, the control unit 20B displays, on the display unit 11, information indicating that a change in set characteristic values is not permitted. As a result, the operator can easily know that the electronic circuit breaker 1B is in a state in which setting of set characteristic values cannot be performed.

Note that the control unit 20B can additionally include information indicating that set characteristic values can be set in a set characteristic value display screen to be displayed on the display unit 11 when the power supply voltage Vc1 is determined to have become equal to or lower than the threshold Vth1. FIG. 17 is a diagram illustrating an example of a set characteristic value display screen according to the embodiment. A set characteristic value display screen 48 illustrated in FIG. 17 additionally displays information indicating that the set characteristic values can be set.

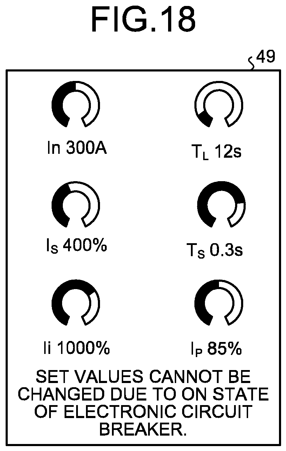

In addition, the control unit 20B can additionally include information indicating that set characteristic values cannot be set in a set characteristic value display screen to be displayed on the display unit 11 when the power supply voltage Vc1 has become higher than the threshold Vth1 from the state equal to or lower than the threshold Vth1 in a state in which the set characteristic value display screen 48 illustrated in FIG. 17 is displayed on the display unit 11. FIG. 18 is a diagram illustrating another example of a set characteristic value display screen according to the embodiment. A set characteristic value display screen 49 illustrated in FIG. 18 additionally includes information indicating that set characteristic values cannot be set.

While examples in which the electronic circuit breakers 1, 1A, and 1B described above are connected with the external devices 50 by wire are presented, the electronic circuit breakers 1, 1A, and 1B may be connected wirelessly with the external devices 50. In this case, power supply from the external devices 50 to the electronic circuit breakers 1, 1A, and 1B is performed through wireless radio transmission, and communication from the external devices 50 to the electronic circuit breakers 1, 1A, and 1B is performed through radio communication.

In addition, while power is supplied from the external devices 50 to the electronic circuit breakers 1, 1A, and 1B, power may be supplied from power supply devices other than the external devices 50 to the electronic circuit breakers 1, 1A, and 1B.

In addition, the timing for updating the display of set characteristic values is not limited to the timings described above. For example, in a case where the power supply voltage Vc1 higher than the threshold Vth1 is output from the power supply units 7 and 7A, the control units 20, 20A, and 20B can generate display update timing at constant intervals.

In addition, the control units 20, 20A, and 20B can each display a screen similar to that displayed on the display unit 11 on the display unit 54 of the external device 50. In this case, the control units 20, 20A, and 20B each output information on the screen to be displayed on the display unit 11 to the external device 50 via the communication unit 10. The control unit 53 of the external device 50 can acquire the information on the screen via the communication unit 52, and display the screen on the display unit 54.

In addition, while the power supply units 7 and 7A each generate the power supply voltage Vc1 by using the currents flowing through the cable runs 2 in the examples described above, the power supply units 7 and 7A may each be configured to generate the power supply voltage Vc1 on the basis of the voltages of the cable runs 2. In this case, the power supply units 7 and 7A each generate the power supply voltage Vc1 by using the voltages between the switch contacts 3 and the load side connection terminals 9.

In addition, the electronic circuit breakers 1, 1A, and 1B may each be provided with a first power supply unit for supplying power supply voltage to the overcurrent determining unit 21 and the tripping control unit 22, and a second power supply for supplying power supply voltage to the set value changing unit 23, 23A, or 23B and the display control unit 24A. In this case, the second power supply may be configured to generate power supply voltage by voltage supply from the external device 50.

In addition, while the control units 20, 20A, and 20B each cause the tripping device 4 to open the switch contacts 3 on the basis of set values of the tripping characteristics relating to overcurrent when overcurrent flows through the cable run 2 in the examples described above, the control units 20, 20A, and 20B can each also cause the tripping device 4 to open the switch contacts 3 on the basis of set values of the tripping characteristics relating to leakage current when electric leakage is detected. In this case, the voltages of the cable runs 2 are input to the current detecting unit 6 of each of the electronic circuit breakers 1, 1A, and 1B, and the current detecting unit 6 can detect the load currents of the cable runs 2 and the leakage current of the cable runs 2 by using the voltages of the cable runs 2 and the currents flowing through the cable runs 2. In addition, the set values of the tripping characteristics relating to leakage current are stored in the storage unit 12 of each of the electronic circuit breakers 1, 1A, and 1B. The control units 20, 20A, and 20B can then each cause the tripping device 4 to open the switch contacts 3 on the basis of the leakage current detected by the current detecting unit 6 and the set values of the tripping characteristics relating to leakage current stored in the storage unit. The control units 20, 20A, and 20B can each display, on the display unit 11, a set characteristic value display screen including the set values of the tripping characteristics relating to overcurrent and the set values of the tripping characteristics relating to leakage current. In this manner, the electronic circuit breakers 1, 1A, and 1B can also function as earth leakage circuit breakers.

The configurations presented in the examples and embodiments above are examples of an aspect of the present invention, and can be combined with other known technologies or can be partly omitted or modified without departing from the scope of the present invention as defined in the appended claims.

### Reference Signs List

1, 1A, 1B electronic circuit breaker; 2, 2₁ to 2₃ cable run; 3, 3₁ to 3₃ switch contact; 4 tripping device; 5, 5₁ to 5₃ current transformer; 6 current detecting unit; 7, 7A, 51 power supply unit; 8 power supply side connection terminal; 9 load side connection terminal; 10, 52 communication unit; 11, 54 display unit; 12 storage unit; 14 connection terminal unit; 15 voltage generating unit; 16 power storing unit; 17 voltage detecting unit; 18 closing state detecting unit; 20, 20A, 20B, 53 control unit; 21 overcurrent determining unit; 22 tripping control unit; 23, 23A, 23B set value changing unit; 24, 24A display control unit; 50 external device; 55 input unit.

## Claims

1. An electronic circuit breaker (1) comprising:
a switch contact (3) to open and close a cable run (2);
a current detecting unit (6) to detect current flowing through the cable run (2);
a tripping device (4) to open the switch contact (3);
a communication unit (10) to receive, from an external device (50), a parameter value determining characteristics of tripping operation to open the switch contact (3);
a display unit (11) capable of displaying the parameter value; and
a control unit (20) to cause the tripping device (4) to open the switch contact (3) on a basis of the current detected by the current detecting unit (6) and the parameter value, and display the parameter value on the display unit (11),
wherein
the display unit (11) is configured to maintain a displayed state without power supplied thereto,
**characterized in that** the control unit (20) is configured to determine whether or not the switch contact (3) is in an open state, and to permit a change in the parameter value from the external device (50) when the switch contact (3) is determined to be in the open state, while the control unit (20) is configured to simultaneously display on the display unit (11), the parameter value and information indicating that a change in the parameter value is not permitted when the switch contact (3) is determined not to be in the open state.

2. The electronic circuit breaker (1) according to claim 1, further comprising: a power supply unit (7) to generate power supply voltage to drive the display unit (11) and the control unit (20) by using current or voltage of the cable run (2).

3. The electronic circuit breaker (1A) according to claim 2, wherein
the control unit (20A) is configured to determine whether or not the power supply voltage becomes equal to or lower than a threshold, and to perform a process of displaying the parameter value on the display unit (11) when the power supply voltage is determined to become equal to or lower than the threshold.

4. The electronic circuit breaker (1) according to claim 2 or 3, wherein
the power supply unit (7) is configured to generate the power supply voltage on a basis of voltage supplied from the external device (50) in a state in which no current flows through the cable run (2).

## Patentansprüche

1. Elektronischer Schutzschalter (1), umfassend:
einen Schaltkontakt (3) zum Öffnen und Schließen einer Kabelführung (2);
eine Stromerfassungseinheit (6) zum Erfassen des durch die Kabelführung (2) fließenden Stroms;
eine Auslösevorrichtung (4) zum Öffnen des Schaltkontakts (3);
eine Kommunikationseinheit (10), um von einer externen Vorrichtung (50) einen Parameterwert zu empfangen, der die Eigenschaften des Auslösevorgangs zum Öffnen des Schaltkontakts (3) bestimmt;
eine Anzeigeeinheit (11), die in der Lage ist, den Parameterwert anzuzeigen;
und
eine Steuereinheit (20), um die Auslösevorrichtung (4) zu veranlassen, den Schaltkontakt (3) auf der Grundlage des von der Stromerfassungseinheit (6) erfassten Stroms und des Parameterwerts zu öffnen, und den Parameterwert auf der Anzeigeeinheit (11) anzuzeigen, wobei
die Anzeigeeinheit (11) dazu konfiguriert ist, um einen angezeigten Zustand aufrechtzuerhalten, ohne dass ihr Energie zugeführt wird,
**dadurch gekennzeichnet, dass** die Steuereinheit (20) dazu konfiguriert ist, um zu bestimmen, ob sich der Schaltkontakt (3) in einem offenen Zustand befindet oder nicht, und dass sie eine Änderung des Parameterwerts von der externen Vorrichtung (50) zulässt, wenn bestimmt wird, dass sich der Schaltkontakt (3) in dem offenen Zustand befindet, während die Steuereinheit (20) dazu konfiguriert ist, um gleichzeitig auf der Anzeigeeinheit (11) den Parameterwert und Informationen anzuzeigen, die angeben, dass eine Änderung des Parameterwerts nicht zulässig ist, wenn bestimmt wird, dass sich der Schaltkontakt (3) nicht in dem offenen Zustand befindet.

2. Elektronischer Schutzschalter (1) nach Anspruch 1, ferner umfassend:
eine Stromversorgungseinheit (7) zum Erzeugen einer Stromversorgungsspannung zum Antreiben der Anzeigeeinheit (11) und der Steuereinheit (20) unter Verwendung des Stroms oder der Spannung der Kabelführung (2).

3. Elektronischer Schutzschalter (1A) nach Anspruch 2, wobei
die Steuereinheit (20A) dazu konfiguriert ist, um zu bestimmen, ob die Stromversorgungsspannung gleich oder niedriger als ein Schwellenwert wird oder nicht, und um einen Prozess des Anzeigens des Parameterwertes auf der Anzeigeeinheit (11) durchzuführen, wenn bestimmt wird, dass die Stromversorgungsspannung gleich oder niedriger als der Schwellenwert wird.

4. Elektronischer Schutzschalter (1) nach Anspruch 2 oder 3, wobei
die Stromversorgungseinheit (7) dazu konfiguriert ist, um die Stromversorgungsspannung auf der Grundlage der von der externen Vorrichtung (50) angelegten Spannung in einem Zustand erzeugt, in dem kein Strom durch die Kabelführung (2) fließt.

## Revendications

1. Disjoncteur de circuit électronique (1) comprenant :
un contact de commutation (3) pour ouvrir et fermer un parcours de câble (2) ;
une unité de détection de courant (6) pour détecter un courant circulant à travers le parcours de câble (2) ;
un dispositif de déclenchement (4) pour ouvrir le contact de commutation (3) ; une unité de communication (10) pour recevoir, d'un dispositif externe (50),
une valeur de paramètre déterminant des caractéristiques d'une opération de déclenchement pour ouvrir le contact de commutation (3) ;
une unité d'affichage (11) apte à afficher la valeur de paramètre ; et
une unité de commande (20) pour faire ouvrir au dispositif de déclenchement (4) le contact de commutation (3) sur la base du courant détecté par l'unité de détection de courant (6) et de la valeur de paramètre, et afficher la valeur de paramètre sur l'unité d'affichage (11),
dans lequel
l'unité d'affichage (11) est configurée pour maintenir un état affiché sans être alimentée en électricité,
**caractérisé en ce que** l'unité de commande (20) est configurée pour déterminer si le contact de commutation (3) est ou non dans un état ouvert, et pour permettre un changement de la valeur de paramètre à partir du dispositif externe (50) quand le contact de commutation (3) est déterminé comme étant dans l'état ouvert, alors que l'unité de commande (20) est configurée pour afficher simultanément, sur l'unité d'affichage (11), la valeur de paramètre et des informations indiquant qu'un changement de la valeur de paramètre n'est pas autorisé quand le contact de commutation (3) est déterminé comme n'étant pas dans l'état ouvert.

2. Disjoncteur de circuit électronique (1) selon la revendication 1, comprenant en outre :
une unité d'alimentation électrique (7) pour générer une tension d'alimentation électrique pour piloter l'unité d'affichage (11) et l'unité de commande (20) en utilisant un courant ou une tension du parcours de câble (2).

3. Disjoncteur de circuit électronique (1A) selon la revendication 2, dans lequel l'unité de commande (20A) est configurée pour déterminer si la tension d'alimentation électrique devient ou non égale ou inférieure à un seuil, et pour réaliser un processus d'affichage de la valeur de paramètre sur l'unité d'affichage (11) quand la tension d'alimentation électrique est déterminée comme devenant égale ou inférieure au seuil.

4. Disjoncteur de circuit électronique (1) selon la revendication 2 ou 3, dans lequel l'unité d'alimentation électrique (7) est configurée pour générer la tension d'alimentation électrique sur la base d'une tension délivrée à partir du dispositif externe (50) dans un état dans lequel aucun courant ne circule à travers le parcours de câble (2).
